# NEUE EUROPÄISCHE PATENTSCHRIFT

(11) **EP 2 287 093 B2**
(45) Veröffentlichungstag und Bekanntmachung des Hinweises auf die Entscheidung über den Einspruch: **15.02.2023**
(45) Hinweis auf die Patenterteilung: 04.12.2013
(21) Anmeldenummer: 10173371.5
(22) Anmeldetag: 19.08.2010
(51) Int. Cl.: B65G 1/04, B65G 1/06

(54) **Regallagersystem sowie ein Verfahren zum Betreiben eines Regallagersystems**
Racking system and method for operating same
Système de rayonnage et procédé de fonctionnement d'un système de rayonnage

(30) Priorität: 19.08.2009 DE 102009038115; 14.09.2009 DE 102009029438
(43) Veröffentlichungstag der Anmeldung: 23.02.2011
(73) Patentinhaber: psb intralogistics GmbH, 66955 Pirmasens (DE)
(72) Erfinder: Franz, Peter, 66976, Rodalben (DE); Feick, Klaus, 66484, Battweiler (DE); Helfrich, Axel, 66919, Herschberg (DE)
(74) Vertreter: Viering, Jentschura & Partner mbB Patent- und Rechtsanwälte

(56) Entgegenhaltungen:
- EP-A1- 0 733 563
- WO-A1-93/14008
- DE-A1- 19 941 640
- DE-A1-102007 051 238
- DE-U1- 9 310 690
- FR-A1- 2 002 275
- JP-A- 61 150 907
- JP-A- 2006 103 875
- US-A1- 2002 021 955
- US-A1- 2005 047 895

## Beschreibung

Die Erfindung betrifft ein Regallagersystem nach dem Oberbegriff des Anspruchs 1 sowie ein Verfahren zum Betreiben eines derartigen Regallagersystems.

Derartige Regallagersysteme, die auch als Hochregallager ausgebildet sein können oder ein oder mehrere Hochregallager aufweisen, ermöglichen das Einlagern einer Vielzahl von Gegenständen. Dies erfolgt in der Praxis in der Regel so, dass die einzelnen Gegenstände auf bzw. in Transporthilfsmitteln, wie Palletten, Behälter oder dergleichen, verbracht werden, und diese Transporthilfsmittel dann in das und in dem Regallagersystem befördert werden. Vor diesem Hintergrund wird die Erfindung vornehmlich anhand des Transportes von Transporthilfsmitteln beschrieben, wodurch die Erfindung allerdings nicht beschränkt sein soll.

Bekannt ist bereits, dass solche Regallagersysteme mit automatisch ausgebildeten Transportsystemen versehen sind, die die einzulagernden Transporthilfsmittel an einen Lagerplatz innerhalb einer Regalreihe des Lagersystems automatisch verbringen oder von einem solchen Lagerplatz zu einem angeschlossenen Logistiksystem verbringen.

Aus der DE 10 2007 051 238 A1 ist bereits ein Regallagersystem bekannt, das gemäß dem Oberbegriff von Anspruch 1 ausgebildet ist und mehrere Regale bzw. Regalreihen und zwischen solchen Regalen bzw. Regalreihen ausgebildete, parallele, Regalgassen aufweist. Die Regale des Regallagersystems bilden dabei verschiedene, in vertikaler Richtung im Abstand abgeordnete Lagerebenen aus. Um ein- oder auszulagernde Transporthilfsmittel in die entsprechende Regalebene zu verbringen, weist das aus der DE 10 2007 051 238 bekannte Regallagersystem eine oder mehrere dort als Behälter-Einlagerlift bzw. Behälter-Auslagerlift bezeichnete Vertikalfördereinrichtungen auf. Diese Vertikalfördereinrichtungen sind gemäß der DE 10 2007 051 238 A1 an den Stirnseiten der Regalreihen einer Regalgasse in deren Verlängerung angeordnet, so dass diese Vertikalfördereinrichtungen horizontal außerhalb der aus den Regalen und den Regalgassen gebildeten Regal-Gassen-Einheit in Flucht der Regalgassen angeordnet sind. Weiter wird gemäß der DE 10 2007 051 238 vorgeschlagen, Satellitenfahrzeuge vorzusehen, mittels welchen eine Verlagerung in Richtung der Regalgassen beim Ein- oder Auslagern von Transporthilfsmitteln ermöglicht wird. Die Transporthilfsmittel können also zum Ein- bzw. Auslagern mittels der Vertikalfördereinrichtungen außerhalb der Regal-Gassen-Einheit aus einer Bestückungsebene in die Lagerebene, in der sich der Ziel-Lagerplatz befindet, verbracht werden, dort an ein Satellitenfahrzeug übergeben werden und von dem Satellitenfahrzeug in Richtung der Regalgassen gesehen in die entsprechende Zielposition verbracht werden.

Zusätzlich zu den Vertikalfördereinrichtungen kann gemäß der DE 10 2007 051 238 A1 ein Satellitenfahrzeuglift vorgesehen sein, der, wie im Absatz [0009] der DE 10 2007 051 238 A1 erläutert, nur dazu dient, unbeladene Satellitenfahrzeuge zwischen verschiedenen Ebenen zu verbringen. In vertikaler Richtung werden gemäß der DE 2007 051 238 A1 die Transporthilfsmittel, dort als Behälter bezeichnet, ausschließlich über die von den Satellitenfahrzeugliften verschiedenen Vertikalfördereinrichtungen in vertikaler Richtung befördert.

Der Erfindung liegt nun die Aufgabe zugrunde, ein Regallagersystem sowie ein Verfahren zum Betreiben eines Regallagersystems zu schaffen, mit dem bei guter Ausnutzung des zur Verfügung stehenden Bauraums ein guter Durchsatz erreichbar ist.

Erfindungsgemäß wird ein Regallagersystem gemäß Anspruch 1 vorgeschlagen. Ein erfindungsgemäßes Verfahren zum Betreiben eines Regallagersystems ist Gegenstand des Anspruchs 12. Weiterbildungen eines derartigen Regallagersystems bzw. eines derartigen Verfahrens sind in den abhängigen Ansprüchen beschrieben.

Erfindungsgemäß wird also insbesondere ein Regallagersystem vorgeschlagen, das ein Regallager aufweist. Das Regallager weist mehrere benachbart zueinander angeordnete Regalreihen, Regalgassen bzw. Regallagergassen, die jeweils zwischen benachbart zueinander angeordneten Regalreihen gegeben sind sowie Führungsbahnen (erste Führungsbahnen) auf, die sich in der jeweiligen Regalgasse entlang einer jeweiligen Regallagerebene erstrecken und entlang welchen Bahnfahrzeuge verfahrbar sind. Es kann vorgesehen sein, dass zwischen jeder der benachbart angeordneten Regalreihen jeweils eine Regalgasse ausgebildet wird. Es kann aber auch vorgesehen sein, dass benachbart angeordnete Regalreihen gegeben sind, die unmittelbar ohne Ausbildung einer Regalgasse aneinandergrenzen. In vertikaler Richtung bilden die Regalreihen jeweils mehrere Regalebenen aus.

Eine Regalreihe kann im Sinne der vorliegenden Erfindung ein Regal sein oder eine aus mehreren Regalen gebildete Reihe sein, wobei in Längsrichtung der Reihe die in dieser Richtung benachbarten Regale,unmittelbar aneinander anstoßen können oder zumindest teilweise Zwischenräume ausbilden können.

Derartige Zwischenräume sind insbesondere auch Bestandteil der Regalreihe.

Die Regalreihen können mehrere Regalböden aufweisen, die vertikal im Abstand angeordnet sind. Ein Regalboden kann von einer Fläche, wie Brett aus Holz oder Metall, gebildet werden, oder von einem Gitter, Netz oder dergleichen.

Weiter weist das Regallagersystem ein oder mehrere Bahnfahrzeuge zum Aufnehmen und zum Transport von in den Regalen einzulagernden oder aus den Regalen auszulagernden Transporthilfsmitteln, wie z.B. Behältern oder Paletten, auf, auf bzw. in denen die zu lagernden Artikel/Produkte untergebracht sind.

Das Regallagersystem weist ferner, wie oben erläutert, erste Führungsbahnen auf, die dem Führen und/oder Halten von Bahnfahrzeugen dienen. Diese ersten Führungsbahnen verlaufen in Längsrichtung einer jeweiligen Regalgasse in einer jeweiligen Regalebene, so dass ein jeweiliges Bahnfahrzeug mittels wenigstens einer ersten Führungsbahn in Längsrichtung der jeweiligen Regalgasse in jeder Regallagerebene verlagerbar ist.

Es ist also insbesondere vorgesehen, dass ein Bahnfahrzeug jeweils in eine erste Führungseinrichtung eingreift bzw. in eine erste Führungseinrichtung eingreifen kann, um von dieser, insbesondere vertikal, gestützt zu werden und/oder in Regalgassenlängsrichtung geführt zu werden.

Die ersten Führungseinrichtungen können beispielsweise Schienen sein und oder Profile wie L-förmige Profile oder U-förmige Profile oder anders ausgestaltete Profile. Die ersten Führungsbahnen verlaufen vorzugsweise gerade in Längsrichtung der Regalgassen.

Es kann vorgesehen sein, dass die ersten Führungsbahnen derart mit dem jeweiligen Bahnfahrzeug, das von dieser geführt und/oder getragen werden soll, zusammenwirken, dass das betreffende Bahnfahrzeug in eine erste Führungsbahn eingehängt ist. Es kann auch vorgesehen sein, dass sich ein Bahnfahrzeug unten oder in einer zwischen seinem oberen und seinem unteren Ende gelegenen Position an einer ersten Führungsbahn abstützt. Weiter kann vorgesehen sein, dass das Bahnfahrzeug umgreifend in eine erste Führungsbahn bzw. Schiene eingreift oder nichtumgreifend in eine solche Führungsbahn eingreift. Es kann vorgesehen sein, dass mehrere erste Führungsbahnen (z.B. wenn als jeweilige Führungsschiene ausgebildet) zum Führen des gleichen Bahnfahrzeugs zusammenwirken. Dies kann beispielsweise so sein, dass beidseits flankierend des zu führenden Bahnfahrzeugs erste Führungseinrichtungen (z.B. Führungsschienen) vorgesehen sind. Es kann auch vorgesehen sein, dass von unten unterstützend mehrere erste Führungsbahnen (z.B. Fahrbahnen oder Führungsschienen) für das Bahnfahrzeug bzw. die Transporthilfsmitteln vorgesehen sind.

Das Bahnfahrzeug kann beispielsweise so ausgestaltet sein, dass es eine Mehrzahl oder Vielzahl von Behältern aufnehmen kann.

Es kann vorgesehen sein, dass das Bahnfahrzeug Räder aufweist, mittels welchen es auf einer oder mehreren (ersten)Führungsbahnen bei seiner Bewegung rollt.

Das Bahnfahrzeug ist vorzugsweise gesteuert verlagerbar. Hierzu kann beispielsweise eine externe Energieversorgung, also eine Energieversorgung, die nicht im Bahnfahrzeug integriert ist, vorgesehen sein. Es kann aber auch vorgesehen sein, dass das Bahnfahrzeug mit einer Energieversorgung, wie Batterie oder dergleichen, versehen ist. In letzterem Falle ist das jeweilige Bahnfahrzeug z.B. auch derart ausgestattet, dass es die für seinen Betrieb (= Fahrbetrieb via Fahrmotor und Umsetzbetrieb zum Transferieren/Umsetzen von Transporthilfsmitteln zwischen Regalplatz und Bahnfahrzeug via Umsetzvorrichtungen, wie z.B. Greifern, Umlaufbändern, etc.) benötigte elektrische Energie vollständig aus einer bahnfahrzeugeigenen elektrischen Speichervorrichtung, wie einem Akkumulator, z.B. einem Kondensator, wie einem sogenannten "PowerCap", entnimmt, sodass das Bahnfahrzeug schleifkontaktlos ausgebildet werden kann und schienenungebunden mit Energie versorgbar ist. Die Nachladung der Speichervorrichtung erfolgt z.B. in unregelmäßigen Zeitintervallen, z.B. gesteuert in Abhängigkeit vom Ladezustand und ggf. zusätzlich in Abhängigkeit von der momentanen Arbeitsanforderung an das Bahnfahrzeug. D.h. eine Steuervorrichtung ermittelt z.B., dass das Bahnfahrzeug eine bestimmten Auftrag zu erledigen hat (wie z.B.: Hole Behälter aus Regalfach x und Bringe Behälter zu Heber y), wobei die Steuervorrichtung den hierzu benötigten Energiebedarf berechnet und diesen mit dem Ladezustand der Speichervorrichtung des Bahnfahrzeugs vergleicht. Die Ladestationen sind z.B. in den Vertikalfördereinrichtungen (Hebern) angeordnet, sodass unabhängig von obigem Ladezustandsvergleich immer eine ggf. erforderliche (wenn der Ladezustand nicht "voll" ist) Nachladung der Speichervorrichtung stattfindet, wenn das Bahnfahrzeug sich in einer Vertikalfördereinrichtung befindet. Es ist aber möglich, die Ladestationen an anderen Positionen im Regallager anzubringen, z.B. an jeweiligen Einzelpositionen in einer Regalgasse.

Das Regallagersystem weist ferner mehrere erste Vertikalfördereinrichtungen für die vertikale Förderung von Bahnfahrzeugen und/oder Transporthilfsmitteln auf.

Diese ersten Vertikalfördereinrichtungen sind insbesondere so ausgebildet, dass sie die Bahnfahrzeuge bzw. die Transporthilfsmittel über mehrere Regalebenen, vorzugsweise über alle Regalebenen, hinweg und damit vertikal an den (ersten) Führungsbahnen vorbei bewegen können. Eine erste Vertikalfördereinrichtung kann insbesondere ein Einlagerlift, über welchen Lagergut (z.B. im Transporthilfsmittel vorliegendes Lagergut) stets nur von außerhalb der Regal-Gassen-Einheit (siehe unten) in diese eingelagert wird, und/oder ein Auslagerlift, über welchen Lagergut (z.B. im Transporthilfsmittel vorliegendes Lagergut) stets nur von innerhalb der Regal-Gassen-Einheit aus dieser ausgelagert wird, bzw. ein Behälter-Einlagerlift und/oder ein Behälter-Auslagerlift sein.

Es kann vorgesehen sein, dass für das Einlagern und für das Auslagern separate Vertikalfördereinrichtungen vorgesehen sind; d.h., es können zum Beispiel eine jeweilige erste Transporthilfs-Vertikalfördereinrichtung zum Einlagern und eine jeweilige zweite Transporthilfsmittel-Vertikalförderrichtung zum Auslagern vorgesehen sein, und ferner kann ggf. noch eine gesonderte Bahnfahrzeug-Vertikalfördereinrichtung zum Heben/Absenken von Bahnfahrzeugen vorgesehen sein. Die jeweilige erste und die jeweilige zweite Transporthilfsmittel-Vertikalfördereinrichtung und die ggf. vorgesehene jeweilige Bahnfahrzeug-Vertikalfördereinrichtung sind einander zugeordnet und bilden eine jeweilige erste Vertikalfördereinrichtungseinheit für die vertikale Förderung von Transporthilfsmitteln und ggf. von Bahnfahrzeugen über mehrere, z.B. alle, Regalebenen hinweg. Es kann aber auch vorgesehen sein, für das Einlagern und für das Auslagern von Transporthilfsmitteln dieselbe Vertikalfördereinrichtung (ggf. in Verbindung mit einer gesonderten Bahnfahrzeug-Vertikalfördereinrichtung) zu verwenden. Die jeweilige Vertikalförderrichtung kann in Form eines Paternosters ausgebildet sein; hierbei können die jeweilige erste und die jeweilige zweite Vertikalfördereinrichtung jeweils als Paternoster ausgebildet sein. Es kann auch vorgesehen sein, dass zum Einlagern und Auslagern von Transporthilfsmitteln jeweils nur ein Paternoster herangezogen wird, wobei z.B. das eine Trumm des Paternosters nur zum Einlagern und das andere Trumm nur zum Auslagern herangezogen wird oder wobei der jeweilige einzige (zum Ein- und Auslagern verwendete) Paternoster pro jeweilige erste Vertikalfördereinrichtung auf beiden Trumms Transporthilfsmittel zum Einlagern und zum Auslagern transportiert (Mischbetrieb), wobei eine Sensoreinrichtung (z.B. Barcodevorrichtung) erkennt, welches Transporthilfsmittel in das Regallager einzulagern und welches aus dem Regallager auszulagern ist.

Bei der Verwendung einer ersten und einer davon separaten, zweiten Vertikalfördereinrichtung zum Einlagern bzw. zum Auslagern von Transporthilfsmitteln sowie beim oben erläuterten Mischbetrieb kann für das jeweilige Bahnfahrzeug nur eine einzige (horizontale) Zugriffsposition vorgesehen werden, von welcher aus Transporthilfsmittel zwischen dem Bahnfahrzeug und der jeweiligen Vertikalfördereinrichtung umsetzbar sind; bei Verwendung von nur einem Paternoster mit getrennter Funktion der Trumms zum Einlagern bzw. zum Auslagern von Transporthilfsmitteln sind für das Bahnfahrzeug zwei (horizontale) Zugriffspositionen bereitzustellen, die dem jeweiligen Trumm zugeordnet sind.

Der jeweiligen Transporthilfsmittel-Vertikalfördereinrichtung ist z.B. ein Pufferregal zugeordnet, in welchem die Transporthilfsmittel temporär ablegbar sind. Hierbei erfolgt eine Umsetzung zwischen Bahnfahrzeug und Transporthilfsmittel-Vertikalfördereinrichtung nicht direkt, sondern indirekt über das Pufferregal. D.h., die Transporthilfsmittel werden beim Einlagern von z.B. einer Fördertechnik zu der Transporthilfsmittel-Vertikalfördereinrichtung (z.B. zu der jeweiligen ersten) gebracht, von welcher die Transporthilfsmittel dann in das zugehörige Pufferregal selektiv (z.B. auch sequentiell) umgesetzt werden, wobei die Transporthilfsmittel dann von dem Pufferregal aus selektiv (z.B. auch sequentiell) weiter auf das Bahnfahrzeug umgesetzt werden, welches dann das Transporthilfsmittel an seinen Regalplatz bringt. Umgekehrt werden beim Auslagern die Transporthilfsmittel von den Bahnfahrzeugen selektiv (z.B. auch sequentiell) in das jeweilige Pufferregal umgesetzt und dann selektiv (z.B. auch sequentiell) von dort aus auf die Transporthilfsmittel-Vertikalfördereinrichtung (z.B. auf die jeweilige zweite) umgesetzt, von welcher die Transporthilfsmittel dann z.B. an eine Fördertechnik übergeben werden, welche die Transporthilfsmittel von dem Regallager wegtransportiert. Der jeweiligen ersten und der jeweiligen zweiten Transporthilfsmittel-Vertikalfördereinrichtung kann ein jeweiliges erstes bzw. ein jeweiliges zweites Pufferregal zugeordnet sein.

Bei dem Regallagersystem gemäß Anspruch 1 ist vorgesehen, dass die wenigstens eine erste Vertikalfördereinrichtung in die aus den Regalreihen und den zwischen Regalreihen sich erstreckenden Regalgassen gebildete Regal-Gassen-Einheit integriert ist, wobei wenigstens eine erste Vertikalfördereinrichtung in einer Regalreihe angeordnet ist.

Das Regallager weist an den Längsenden der Regalgassen eine jeweilige Stirnseite auf und an seinen quer zu den Regalgassen vorliegenden Querenden eine jeweilige Längsseite auf. Bei der obigen Ausgestaltung sind an den Stirnseiten keinerlei Vertikalfördereinrichtungen vorgesehen; das vertikale Heben/Absenken von Transporthilfsmitteln und ggf. von Bahnfahrzeugen erfolgt dann nur innerhalb des Regalagers und im Abstand zu dessen Stirnseiten. Die Transporthilfsmittel werden damit an den Längsseiten und im Abstand von den Stirnseiten des Regallagers in das Regallager hineintransportiert und aus diesem heraustransportiert; entsprechend ist z.B. eine Fördertechnik an eine oder an beide (sich gegenüberliegende) Längsseiten des Regallagers angeschlossen, um das seitliche Einlagern bzw. Auslagern von Transporthilfsmitteln zu ermöglichen.

Es ist aber auch möglich, zusätzlich noch auf z.B. einer oder auch auf beiden Stirnseiten des Regallagers erste Vertikalfördereinrichtungen anzuordnen, z.B. einer jeweiligen Regallagergasse zugeordnet eine erste Vertikalfördereinrichtung oder einer jeweiligen Regallagergasse zugeordnet eine erste und eine zweite Transporthilfsmittel-Vertikalfördereinrichtung und ggf. noch eine Bahnfahrzeug-Vertikalfördereinrichtung oder ein oder mehrere Regalbediengerät/e mit jeweiligem Vertikalheber, welches/welche quer über die Regallagergassen verafahrbar ist/sind, wobei das jeweilige Regalbediengerät auch derart ausgebildet sein kann, dass von ihm ein oder mehrere Bahnfahrzeuge mit darauf vorliegenden Transporthilfsmitteln stirnseitig des Regallagers zu einer beliebigen Führungsbahn (= beliebige Regallagergasse und beliebige Regalebene) bringbar ist/sind. Es können ferner auf der einen Stirnseite des Regallagers pro Lagergasse jeweils eine erste und eine zweite Transporthilfsmittel-Vertikalfördereinrichtung und eine Bahnfahrzeug-Vertikalfördervorrichtung vorgesehen sein, wobei die erste Transporthilfsmittel-Vertikalfördereinrichtung nur zum Einlagern von Transporthilfsmitteln und die zweite Transporthilfsmittel-Vertikalfördereinrichtung nur zum Auslagern von Transporthilfsmitteln vorgesehen sein kann, und wobei z.B. jeder Transporthilfsmittel-Vertikalfördereinrichtung ein Pufferregal zugeordnet ist, auf welche die zugehörige Transporthilfsmittel-Vertikalfördereinrichtung selektiv (z.B. auch sequentiell) zugreifen kann, um daraus Transporthilfsmittel zu entnehmen und darin abzulegen, und auf welche die Bahnfahrzeuge, z.B. von der Bahnfahrzeug-Vertikalfördereinrichtung aus, selektiv (z.B. auch sequentiell) zugreifen können, um daraus Transporthilfsmittel zu entnehmen und darin abzulegen. So kann z.B. vorgesehen sein, dass von einer stirnseitig an das Regallager angeschlossenen Fördertechnik Transporthilfsmittel an die jeweiligen Einlager-Transporthilfsmittel-Vertikalfördereinrichtungen zum Einlagern zuführbar sind (z.B. über Rollenbänder), welche dann die einzulagernden Transporthilfsmittel in das zugehörige (Einlager-)Pufferregal ablegen, wobei dann die Bahnfahrzeuge (z.B. von der zugehörigen Bahnfahrzeug-Vertikalfördereinrichtung aus) die im Einlager-Pufferregal abgelegten Transporthilfsmittel selektiv (z.B. auch sequentiell) aufnehmen und in das Regallager einlagern; umgekehrt legen Bahnfahrzeuge auszulagernde Transporthilfsmittel selektiv (z.B. auch sequentiell) im jeweiligen (Auslager-)Pufferregal ab, wobei die zugehörige (Auslager-) Transporthilfsmittel-Vertikalfördereinrichtung selektiv (z.B. auch sequentiell) Transporthilfsmittel aus dem Auslager-Pufferregal aufnimmt und an die Fördertechnik abgibt (wiederum z.B. über Rollenbänder). Auch bei einer Ausgestaltung mit in einer Regalreihe angeordneter erster Vertikalfördereinrichtung kann vorgesehen sein, dass bezogen auf eine, mehrere oder alle Regalgasse die beidseits endseitig gelegene Flucht diese Regalgassen außerhalb der Regal-Gassen-Einheit frei von ersten Vertikalfördereinrichtungen ist.

Die angesprochene Flucht ist dabei insbesondere der sich außerhalb der Regal-Gassen-Einheit jeweils erstreckende Raum, der sich in Richtung der Längsrichtung der betreffenden Regalgasse erstreckt und von dem an der Außenseite der Regal-Gassen-Einheit gebildeten Begrenzungskontur der betreffenden Regalgasse ummantelt bzw. begrenzt wird bzw. in horizontaler Richtung jeweils begrenzt wird.

Wie angesprochen ist in der angesprochenen Flucht der betreffenden Regalgasse außerhalb der Regal-Gassen-Einheit z.B. keine Vertikalfördereinrichtung vorgesehen.

Weiter kann vorgesehen sein, dass mehrere oder sämtliche Vertikalfördereinrichtungen in die Regal-Gassen-Einheit in vorerwähnter Weise integriert sind bzw., dass für mehrere oder alle Regalgassen beidseits in der Flucht der jeweiligen Regellagergasse außerhalb der Regal-Gassen-Einheit keine Vertikalfördereinrichtung vorgesehen ist bzw. die außerhalb der Regal-Gassen-Einheit in der Flucht der betreffenden Regalgasse beidseits gelegene Bereich frei von Vertikalfördereinrichtungen ist.

Ohne dass die Erfindung auf solche Gestaltungen beschränkt sein soll, bei denen bezüglich sämtlicher Regalgassen in der außerhalb der Regal-Gassen-Einheit liegenden Flucht der jeweiligen Regalgassen frei von Vertikalfördereinrichtungen ist, weist ein solches Ausführungsbeispiel der Erfindung den besonderen Vorteil aufweist, dass extrem wenig Bauraum verloren geht. Wenn allerdings sämtliche Vertikalfördereinrichtungen stirnseitig oder längsseitig von außen an die Regal-Gassen-Einheit außen angesetzt sind, ist der zuvor angesprochene Bereich quasi völlig verloren.

Gemäß der Erfindung sind die Vertikalfördereinrichtungen, d.h. z.B. die jeweilige ersten und die jeweiligen zweiten Transporthilfsmittel-Vertikalfördereinrichtungen, in das Regallager bzw. in die Regal-Gassen-Einheit integriert, d.h. die Vertikalfördereinrichtungen ragen nicht stirnseitig oder längsseitig aus dem Regallager heraus. Die Bahnfahrzeuge können sich z.B. seitlich an den Vertikalfördereinrichtungen vorbeibewegen; d.h. die Führungsbahnen verlaufen im Regallager an den Vertikalfördereinrichtungen, z.B. an den jeweiligen ersten und den jeweiligen zweiten Vertikalfördereinrichtungen, vorbei. Bei einem Regallagersystem mit (nur) stirnseitig angeordneten Hebern für die Transporthilfsmittel und ggf. für Bahnfahrzeuge hat sich eine Ebenenanzahl von ca. 12 Ebenen als ein gerade noch sinnvoll betreibbares Maximum gezeigt. Mit dem Einsatz der in die Regallagerreihen integrierten Vertikalfördereinrichtungen, an denen die Bahnfahrzeuge seitlich vorbeifahren können (das Umsetzen der Transporthilfsmitteln zwischen jeweiliger Transporthilfsmittel-Vertikalfördereinrichtung bzw. deren zugeordnetem Pufferregal und dem Bahnfahrzeug erfolgt dann ebenfalls seitlich bzw. quer zur Längsrichtung der Regallagergassen), können wesentlich mehr Ebenen als zwölf effektiv betrieben werden.

Die zweite Führungsbahn ist dabei eine Führungsbahn, die zumindest abschnittsweise quer zur ersten Führungsbahn in einem Regal verläuft. Eine derartige zweite Führungsbahn kann sich gerade oder nicht-gerade erstrecken. Beispielsweise kann eine solche zweite Führungsbahn geschwungene Abschnitte aufweisen oder aus geraden oder geschwungenen Abschnitten zusammengesetzt sein. Die zweite Führungsbahn kann z.B. so ausgebildet sein und oder mit einem von ihr geführten und/oder getragenen Bahnfahrzeug zusammenwirken, wie es oben in Bezug auf die erste Führungsbahn erläutert wurde.

Es kann vorgesehen sein, dass ein Transporthilfsmittel oder ein Bahnfahrzeug mittels einer ersten Führungsbahn automatisch zu einer zweiten Führungsbahn verbringbar ist und über diese zweite Führungsbahn weiterbefördert werden kann. Dies kann beispielsweise so sein, dass sich eine zweite Führungsbahn unmittelbar an eine erste Führungsbahn anschließt. Es kann auch vorgesehen sein, dass mittels einer Vertikalfördereinrichtung ein Bahnfahrzeug oder Transporthilfsmittel von einer ersten Führungsbahn zu einer zweiten Führungsbahn verbringbar ist, und umgekehrt.

Es kann aber auch vorgesehen sein, dass mehrere zweite Führungsbahnen vorgesehen sind, wobei sich die Gesamtheit dieser zweiten Führungsbahnen quer zu den ersten Führungsbahnen über mehrere Regalreihen erstreckt.

Beispielsweise kann vorgesehen sein, dass sich die Gesamtheit der Führungsbahnen über sämtliche Regalreihen erstreckt, oder von einer ersten an einem Ende der Regal-Gassen-Einheit angeordneten Führungsbahn bis zu dem am gegenüberliegenden Ende der Regal-Gassen-Einheit gelegenen Ende der dort angeordneten letzten Regalreihe. Es kann aber auch vorgesehen sein, dass eine solche Führungsbahn sich zu einer im Bereich eines Endes einer Regalgasse befindlichen Seite der Regal-Gassen-Einheit erstreckt.

Auch Kombinationen der vorerwähnten beispielhaften Verläufe der zweiten Führungsbahnen können vorgesehen sein.

Hierdurch wird eine besondere Flexibilität der entsprechenden beispielhaften Ausgestaltungen geschaffen, da an unterschiedlichsten Stellen der Außenseite, z.B. an der Längsseite, der Regal-Gassen-Einheit somit Schnittstellen zu einem angrenzenden Logistiksystem geschaffen werden können. So ist es beispielsweise möglich, die Übergabe von Transporthilfsmitteln oder Bahnfahrzeugen an ein angrenzendes, nicht zur Regal-Gassen-Einheit gehörendes Logistiksystem an gegenüberliegenden Seiten, z.B. an gegenüberliegenden Längsseiten, der Regal-Gassen-Einheit vorzusehen und/oder jeweils an aneinander anstoßenden Seiten (Längs- und Stirnseite). Weiter ist es möglich, auf der gleichen Seite, z.B. an einer Längseite, der Regal-Gassen-Einheit mehrere Schnittstellen zu einem angrenzenden Logistiksystem (z.B. einer Fördertechnik) vorzusehen.

Es kann beispielsweise auch vorgesehen sein, dass eine, mehrere oder alle zweite Führungsbahnen im Wesentlichen horizontal verlaufen. Beispielsweise können sämtliche zweite Führungsbahnen im Wesentlichen in der gleichen horizontalen Ebene verlaufen.

In vorteilhafter Ausgestaltung ist das Regallagersystem als vollautomatisches Regallagersystem ausgebildet. Zu diesem Zweck kann eine geeignete Steuereinrichtung, z.B. eine elektronische Steuereinrichtung, vorgesehen sein.

Eine, mehrere oder alle zweite Führungseinrichtungen können vertikal gesehen im unteren oder im oberen Bereich der Regal-Gassen-Einheit angeordnet sein, bzw. den dort jeweils gelegenen Abschluss bilden. So ist es beispielsweise auch möglich, dass oberhalb von obersten Regalbrettern oder dergleichen zweite Führungseinrichtungen vorgesehen sind. In zu bevorzugender Ausgestaltung wird der nach oben fluchtende Bereich der Regal-Gassen-Einheit als Bestandteil der Regal-Gassen-Einheit angesehen.

Es kann aber auch vorgesehen sein, dass zwischen der obersten und der untersten Regalebene eine, mehrere oder alle zweite Führungsbahnen vorgesehen sind.

Zum Beispiel ist in der Regal-Gassen-Einheit eine Ein- und Auslagerungsebene (auch als Fördertechnikebene bezeichnet) vorgesehen, über welche Transporthilfsmittel von einer Fördertechnik aus (stets) in die Regal-Gassen-Einheit und / oder (stets) aus der Regal-Gassen-Einheit heraus an eine Fördertechnik gefördert werden können, was beispielsweise mittels zweiter Führungseinrichtungen erfolgen kann.

Es können auch mehrere, wie beispielsweise zwei, drei, vier, fünf, oder mehr als fünf, oder mehr als zehn, Fördertechnikebenen in der Regal-Gassen-Einheit vorgesehen sein.

Durch das Vorsehen mehrerer Fördertechnikebenen können beispielsweise Materialflusswege verkürzt werden, wenn das Regallagersystem, insbesondere als Hochregallagersystem ausgebildet, an ein Gebäude angebaut ist, das auf verschiedenen Etagen, den Zugang zum Regallagersystem ermöglicht, was am Beispiel von zwei Fördertechnikebenen erläutert werden soll: So kann die (Fertigungs-)Organisation beispielsweise vorgeben, dass in oberen Etagen des Gebäudes eine erste Materialgruppe, beispielsweise zur Fertigung eines ersten Produktes, und in unteren Etagen des Gebäudes eine zweite Materialgruppe, beispielsweise zur Fertigung eines zweiten Produktes, erforderlich ist. Wäre in einem solchen Fall nur eine Fördertechnikebene gegeben, müsste die erste und die zweite Materialgruppe innerhalb der Regal-Gassen-Einheit in diese Förderebene und über diese eine Förderebene in das Gebäude verbracht werden. Innerhalb des Gebäudes müsste dann die erste Materialgruppe in die oberen Etagen des Gebäudes und die zweite Materialgruppe in die unteren Etagen des Gebäudes verbracht werden. Wenn nun in diesem Beispiel sowohl im Bereich der oberen Etagen als auch im Bereich der unteren Etagen eine Förderebene vorgesehen ist, kann die erste Materialgruppe über die obere Förderebene direkt in den Bereich der oberen Etagen des Gebäudes und die zweite Materialgruppe über die untere Förderebene direkt in den Bereich der unteren Etagen des Gebäudes verbracht werden. Zusätzlich könnte die Einlagerung der ersten Materialgruppe so erfolgen, dass diese in der Nähe der oberen Förderebene eingelagert ist, während die Einlagerung der zweiten Materialgruppe so erfolgen könnte, dass diese in der Nähe der unteren Förderebene eingelagert ist.

Sinnvoll können mehrere Förderebenen auch beispielsweise sein, wenn die Anlieferung von einzulagerndem Material und der Abruf von eingelagertem Material in unterschiedlichen Etagen erfolgt. In einem solchen Fall könnte beispielweise eine Förderebene vorgesehen sein, über die ausschließlich Material in die Regal-Gassen-Einheit hinein gefördert wird, sowie eine weitere Förderebene, über die ausschließlich Material aus der Regal-Gassen-Einheit heraus gefördert wird. Es versteht sich, dass es entsprechend auch sinnvoll sein kann, mehr als zwei Förderebenen vorzusehen, von denen über eine Anzahl (insbesondere Mehrzahl) von Förderebenen ausschließlich in die Regal-Gassen-Einheit hinein gefördert wird und von denen über ein Anzahl (insbesondere Mehrzahl) von anderen Förderebenen ausschließlich aus der Regal-Gassen-Einheit heraus gefördert wird.

Die Vertikalfördereinrichtungen sind insbesondere so, dass sie in horizontaler Richtung fest sind. Sie können aber Handhabungseinrichtungen aufweisen, die ihrerseits gegebenenfalls gewisse Handhabungsbewegungen auch in horizontaler Richtung erlauben. Solche Handhabungseinrichtungen können beispielsweise so sein, wie die Handhabungseinrichtungen, die im Folgenden in Bezug auf Bahnfahrzeuge beschrieben sind.

Es kann vorgesehen sein, dass ein, mehrere oder alle Bahnfahrzeuge mit einer ersten Handhabungseinrichtung für das Be- und/oder Entladen eines jeweiligen Bahnfahrzeugs versehen sind. Eine derartige Handhabungseinrichtung kann beispielsweise ein in vertikaler und/oder horizontaler Richtung teleskopisch ausgebildete Einrichtung aufweisen und/oder eine Schiebeeinrichtung und oder einen Schwenkarm und/oder einen Greifarm oder dergleichen.

Zusätzlich zu den Bahnfahrzeugen können auch Satellitenfahrzeuge vorgesehen sein, welche von den Bahnfahrzeugen transportiert werden und welche die Transporthilfsmittel tragen, wobei dabei vorgesehen sein kann, dass in den Regalen in verschiedenen Ebenen jeweils Fahrzeuggassen, Fahrzeugkanäle oder dergleichen für die Bewegung derartiger Satellitenfahrzeuge gebildet werden.

Die Regalreihen können eine Vielzahl von diskret unterscheidbaren oder nicht unterscheidbaren Lagerplätzen bereitstellen.

Bei einem Regallagersystem gemäß Anspruch 11sind die einzulagernden Transporthilfsmittel, wie Behälter oder Paletten oder dergleichen, innerhalb der Regal-Gassen-Einheit automatisch von einem beliebigen ersten Lagerplatz zu einem beliebigen zweiten Lagerplatz verbringbar. Dies ist also z.B. so, dass das entsprechende Transporthilfsmittel nicht aus der Regal-Gassen-Einheit - insbesondere in horizontaler Richtung - heraus bewegt werden muss, wenn es von seiner aktuellen Lagerposition in eine neue Sollagerposition verbracht werden soll.

Es sei angemerkt, dass die Regal-Gassen-Einheit umfangsmäßig, das heißt, umfangsmäßig bezüglich einer Vertikalen, insbesondere durch die umfangsmäßig außen an der Regal-Gassen-Einheit gelegenen Konturen seiner Regalreihen und die kürzesten Verbindungsstrecken bzw. -flächen benachbarter Regalreihen im Bereich von Regalgassen begrenzt wird.

Gemäß der Erfindung kann vorgesehen sein, dass ein Verfahren zum Betreiben eines Regallagersystems das Einführen eines zu lagernden Transporthilfsmittels in die Regal-Gassen-Einheit von außerhalb der Regal-Gassen-Einheit umfasst, und zwar in einer vertikalen Höhe, die z.B. der Höhe einer Fördertechnikebene entspricht, die unabhängig von der Regalebene ist, in die das einzulagernde Transporthilfsmittel zum Einlagern verbracht werden soll. Das vertikale Verbringen der zu lagernden Transporthilfsmittel in die Regalebene, in die es verbracht werden soll, bzw. in der sich der Ziellagerplatz befindet, wird dann innerhalb der Regal-Gassen-Einheit durchgeführt. In der entsprechenden Regalebene kann dann ein horizontales Verbringen an die entsprechende Lagerposition erfolgen.

Gemäß einem Verfahren nach Anspruch 12 ist insbesondere vorgesehen, beim Befördern eines einzulagernden Transporthilfsmittels von außerhalb der Regal-Gassen-Einheit zu einer Ziellagerposition innerhalb der Regal-Gassen-Einheit und/oder beim Verbringen von einer alten Ziellagerposition innerhalb der Regal-Gassen-Einheit in eine neue Ziellagerposition in einem Regal der Regal-Gassen-Einheit und/oder beim Verbringen einer Lagerposition in einem Regal der Regal-Gassen-Einheit aus der Regal-Gassen-Einheit heraus das betreffende Transporthilfsmittel derart automatisch befördert wird, dass es während dieser Beförderung von einer Seite, z.B. einer Längsseite, in ein Regal der Regal-Gassen-Einheit hinein bewegt wird und auf einer anderen Seite, z.B. der anderen Längsseite, die von dieser einen Seite der betreffenden Regalreihe verschieden ist, aus diesem Regal wieder heraus bewegt wird. Dies kann beispielsweise so sein, dass das betreffende Transporthilfsmittel aus Richtung einer Lagergasse in ein Regal hinein bewegt und in eine auf der gegenüberliegenden Seite dieser Regalreihe angeordneten weiteren Regalgasse wieder heraus bewegt wird. Ferner kann vorgesehen sein, dass ein solches Transporthilfsmittel von einer umfangsmäßigen Begrenzung der Regal-Gassen-Einheit in eine Regalreihe der Regal-Gassen-Einheit hinein bewegt und in eine Regalgasse der Regal-Gassen-Einheit, die an diese Regalreihen angrenzt, aus diesem Regal wieder heraus bewegt wird.

Das Regallagersystem bzw. das Verfahren zum Betreiben eines Regallagersystems wird in vorteilhafter Ausgestaltung vollautomatisch betrieben.

Es kann auch vorgesehen sein, dass das Regallagersystem Pufferanlagen zur Zwischenlagerung von Behältern oder dergleichen aufweist. Diese können wie oben erläutert beispielsweise an einer Vertikalfördereinrichtung vorgesehen sein, oder mit dieser gekoppelt sein.

Das Regallagersystem kann insbesondere ein Hochregallagersystem sein bzw. Hochregallager aufweisen. Das Regallagersystem kann eine Höhe haben, die unter 5m liegt, es kann aber auch vorgesehen sein, dass die Höhe des Regallagersystems größer als 5m oder größer als 7m oder größer als 10m oder größer als 15m oder größer als 20m oder größer als 30m ist.

Für erhöhten Ein-Auslagerbetrieb sind z.B. mehrere erste und ggf. zweite Vertikalfördereinrichtungen i in die jeweilige Regallagerreihe integriert. Es aber auch möglich, pro Regallagerreihe nur eine erste und ggf. nur einer zugehörige zweite Vertikalfördereinrichtung vorzusehen, oder auch weniger erste (und ggf. eine entsprechend reduzierte Anzahl zugehöriger zweiter) Vertikalfördereinrichtungen vorzusehen als Regallagerreihen oder als Regallagergassen vorhanden sind. Es kann ferner zum Beispiel ein stirnseitiges Regalbediengerät vorgesehen sein, von welchem Bahnfahrzeuge (auch mit Transporthilfsmittel beladen) quer über die Regallagergassen hinweg zwischen allen Regallagergassen hin sowie vertikal zwischen allen Regalebenen überführbar sind und damit zu jeder beliebigen Führungsbahn des Regallagers überführbar sind.

Im Folgenden soll nun ein Ausführungsbeispiel der Erfindung näher beschrieben werden, wobei anzumerken ist, dass die Erfindung durch dieses Ausführungsbeispiel nicht auf dieses beschränkt sein soll.

Es zeigt:
Fig. 1 zeigt eine Draufsicht auf ein beispielhaftes erfindungsgemäßes Regallagersystem;
Fig. 1A zeigt einen vergrößerten Ausschnitt aus Fig. 1;
Fig. 2 zeigt eine Fördertechnikebene des Regallagersystems gemäß Fig. 1;
Fig. 2A zeigt einen vergrößerten Ausschnitt aus Figur 2;
Fig. 3 zeigt einen Vertikalschnitt durch die Gestaltung gemäß den Fig. 1 und 2;
Fig. 3A zeigt einen vergrößerten Ausschnitt aus Fig. 3.

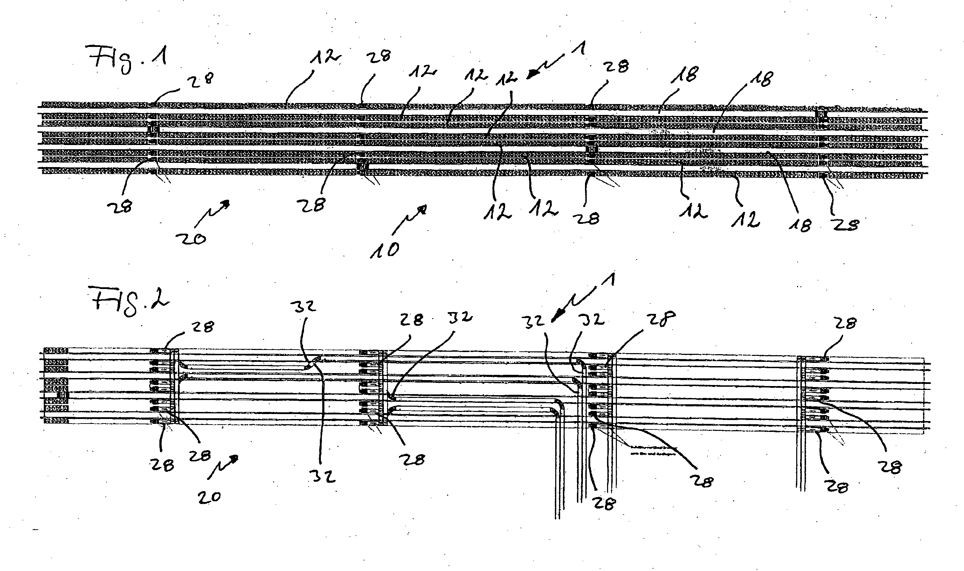

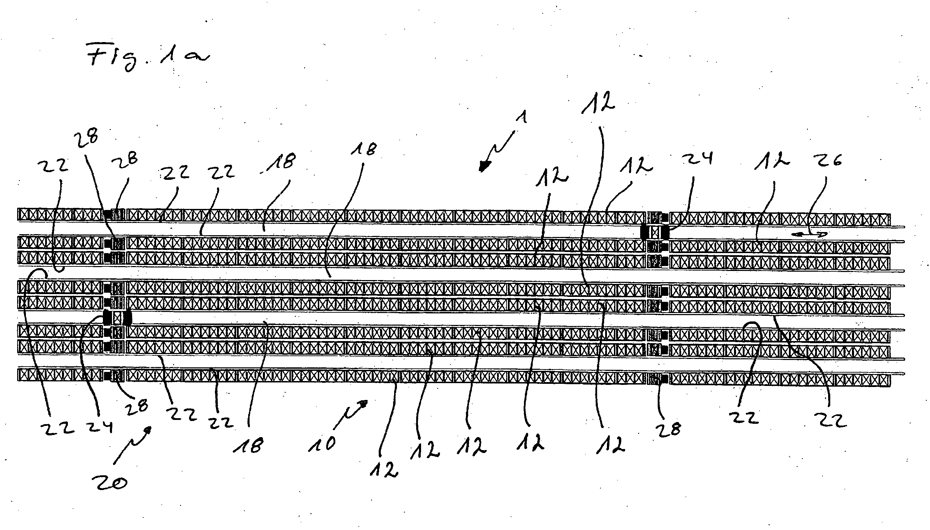

Fig. 1 zeigt ein beispielhaftes erfindungsgemäßes Regallagersystem 1, das automatisch bzw. vollautomatisch ausgebildet ist, und auch als automatisches Shuttle-Lager bezeichnet werden kann. Dargestellt ist in Fig. 1 eine Draufsicht auf dieses Regallagersystem 1.

Wie Fig. 1 und insbesondere auch dem vergrößerten Ausschnitt gemäß Fig. 1A entnommen werden kann, weist das Regallagersystem 1 ein Regallager 10 auf. Das Regallager 10 weist wiederum mehrere benachbart zueinander angeordnete Regalreihen 12 auf. Eine solche Regallagerreihe 12 kann insbesondere sich in einer Längsrichtung erstreckendem Regal gebildet werden oder von mehreren Regalen, die nach Art einer Reihe angeordnet sind, wobei in diesem Fall die einzelnen Regalreihen aneinander anstoßen können oder Zwischenräume zwischen sich ausbilden können.

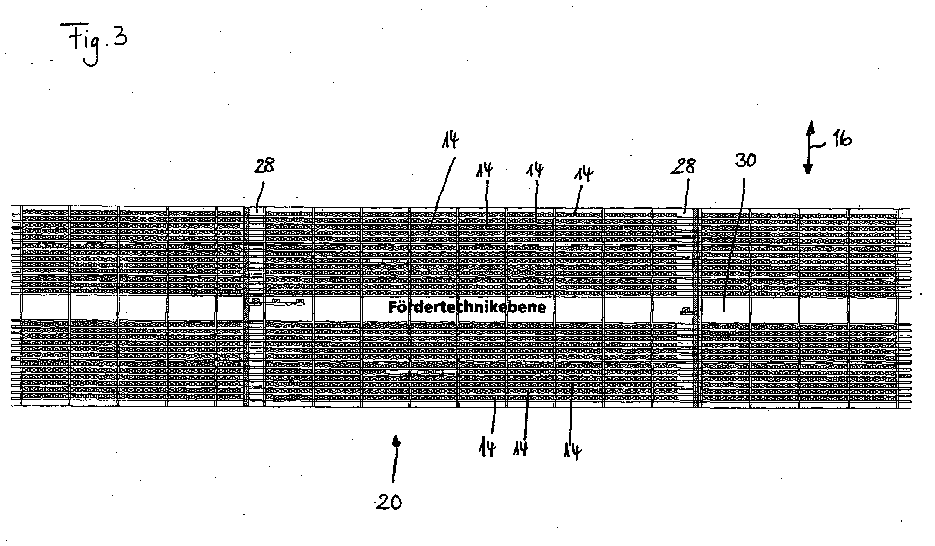

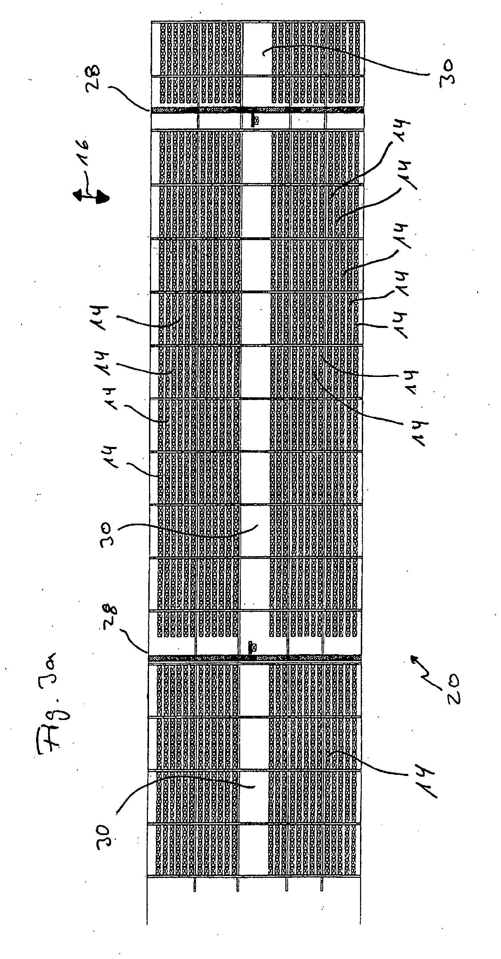

In einer vertikalen Richtung, die in Fig. 3 schematisch durch den Pfeil 16 bezeichnet ist, bilden die Regalreihen 12 jeweils mehrere Regalebenen 14 aus. Die Regalreihen 12 erstrecken sich also in einer horizontalen Richtung und in einer vertikalen Richtung.

Zwischen benachbart zueinander angeordneten Regalreihen 12 werden Regalgassen 18 ausgebildet.

Die Einheit aus den Regalreihen 12 und den Regalgassen 18 bildet eine Regal-Gassen-Einheit bzw. wird als Regal-Gassen-Einheit 20 bezeichnet.

Ferner weist das Regallagersystem 1 Führungsbahnen 22 zum Führen von Bahnfahrzeugen 24 auf, wobei in Fig. 1 bzw. Fig. 1A lediglich zwei Bahnfahrzeuge 24 beispielhaft gezeigt sind. Es kann vorgesehen sein, dass in jeder Regallagerebene 14 jeder Regalgasse 18 jeweils ein oder mehrere Bahnfahrzeuge 24 vorgesehen sind. Es kann aber auch vorgesehen sein, dass die Anzahl der Bahnfahrzeuge 24 geringer ist.

Die :Bahnfahrzeuge 24 dienen der Aufnahme und dem Transport von in den Regalreihen 12 einzulagernden oder aus dem Regallager auszulagernden Transporthilfsmitteln, wie Paletten, Behältern oder dergleichen, die mit Produkten befüllt sein können bzw. in der Regel befüllt sind. Es sei allerdings angemerkt, dass grundsätzlich auch an Stelle der Transporthilfsmittel unmittelbar Produkte befördert werden können, was in der Praxis allerdings eher selten ist.

Die ersten Führungsbahnen 22 zum Führen der Bahnfahrzeuge 24 verlaufen jeweils in Längsrichtung der Regalgassen 18 entlang einer jeweiligen Regallagerebene 14, wobei diese Längsrichtung in Fig. 1A durch den Doppelpfeil 26 verdeutlicht ist. Im Falle dass das Bahnfahrzeug 24 mit einer solchen Verbringvorrichtung ausgestattet ist, die es ermöglicht, Transporthilfsmittel vom Bahnfahrzeug 24 aus relativ zum Bahnfahrtzeug 24.vertikal ein Stück nach oben und/oder nach unten in einen Regallagerplatz (z.B. durch eine Regallagerplatte gebildet) zu positionieren, dann kann die Anzahl der Regallagerebenen 14, in denen sich Führungsbahnen 22 längs der Regallagergasse 18 erstrecken, kleiner sein als die Anzahl der genau übereinander vorgesehenen Regallagerplatze (z.B. Anzahl der übereinander angeordneten Regallagerplatten). In dem hier dargestellten Ausführungsbeispiel sind für die Führung eines Bahnfahrzeugs 24 jeweils zwei erste Führungsbahnen 22 (hier als jeweilige Führungsschiene ausgebildet) vorgesehen. Prinzipiell können aber auch lediglich eine erste Führungsbahn 22 oder mehr als zwei erste Führungsbahnen 22 für die Führung und / oder das jeweilige Halten jeweils eines Bahnfahrzeugs 24 vorgesehen sein. Mittels der jeweils ersten Führungsbahn(en) 22 werden die Bahnfahrzeuge 24 so geführt, dass sie in Längsrichtung der Regalgassen 18 verlagerbar sind, und zwar insbesondere bei gleichbleibender Vertikalposition.

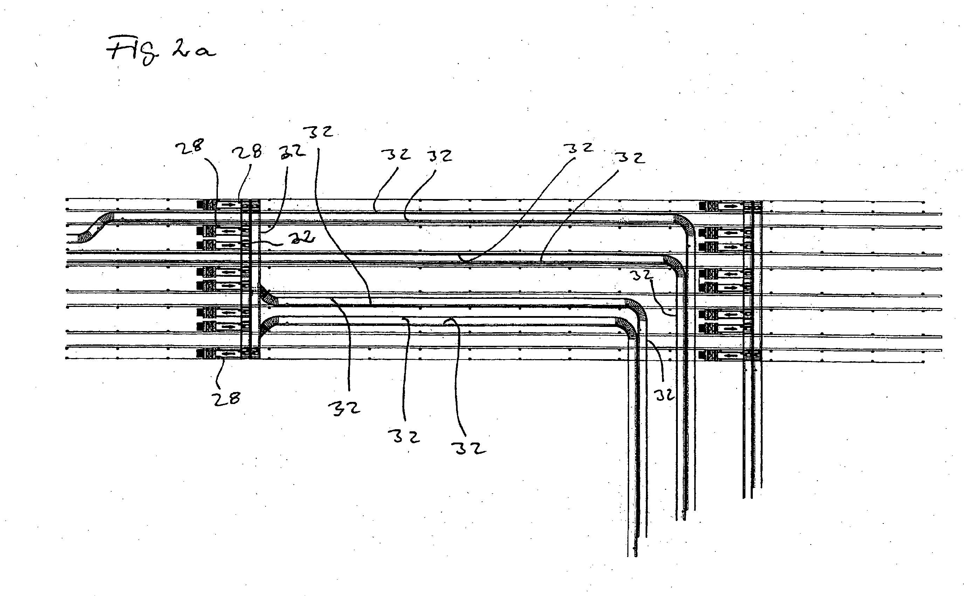

Ferner sind eine oder mehrere erste Vertikalfördereinrichtungen 28 für die vertikale Förderung von Bahnfahrzeugen 24 und/oder Transporthilfsmitteln über mehrere Regalebenen hinweg vorgesehen. Diese Vertikalfördereinrichtungen sind dabei insbesondere als (ausschließlicher) Einlagerlift und/oder als (ausschließlicher) Auslagerlift ausgebildet (siehe z.B. auch Pfeile in Figur 2a) bzw. bilden Einlagerlifte und/oder Auslagerlifte. Im vorliegenden Ausführungsbeispiel stellt die jeweilige Vertikalfördereinrichtung 28 eine Vertikalfördereinrichtungs-Einheit aus einer ersten Transporthilfsmittel-Fördereinrichtung zum Einlagern von Transporthilfsmitteln in das Regallager und einer zweiten Transporthilfsmittel-Fördereinrichtung zum Auslagern von Transporthilfsmitteln aus dem Regallager dar. Die jeweilige Vertikalfördereinrichtung 28 (Vertikalfördereinrichtungs-Einheit) kann auch ggf. noch mit einer Bahnfahrzeug-Vertikalfördereinrichtung ausgebildet sein. Die Vertikalfördereinrichtungen 28 können in größerer Anzahl in dem Regallagersystem 1, das auch als Regalanlage bezeichnet wird, angeordnet sein, und zwar insbesondere in einer Regalreihe 12 integriert. Insbesondere können auch in einer Vielzahl von Regalreihen 12 Vertikalfördereinrichtungen 28 vorgesehen sein. Überdies ist möglich, dass in einer Regalreihe 12 mehrere oder jeweils mehrere Vertikalfördereinrichtungen 28 vorgesehen sind.

Das hier konkret dargestellte Ausführungsbeispiel weist in jeder der Regalreihen 12 mehrere Vertikalfördereinrichtungen 28 auf. Anzumerken ist, dass diese symbolisch gleich dargestellt sind, jedoch nicht jeweils mit Bezugszeichen versehen sind, um die Übersichtlichkeit nicht zu erschweren.

Es sind also in die aus den Regalreihen 12 und den Regalgassen 18 gebildeten Regal-Gassen-Einheit 20 die Vertikalfördereinrichtungen 28 integriert.

Die Führungsbahnen 22 verlaufen an den Vertikalfördereinrichtungen 28 (horizontal) vorbei, und die Vertikalfördereinrichtungen 28 verlaufen an den Führungsbahnen 22 vertikal vorbei, sodass innerhalb einer jeweiligen Regalgasse 18 die dort geführten Bahnfahrzeuge 24 zu jeder in dieser Regalgasse 18 vorgesehenen Vertikalfördereinrichtung 28 verfahrbar sind und sodass die jeweilige Vertikalfördereinrichtung 28 die Führungsbahnen 22 in der jeweiligen Regallagerebene 14 bedienen kann.

Im Gegensatz hierzu ist in dem Stand der Technik gemäß der DE 10 2007 051 238 die Anordnung der Ein- und Auslagerlifte stirnseitig zur Regalgasse angeordnet, wobei diese Lifte einen Satellitenfahrzeug vorgeschalteter Behälter-Einlagerlift bzw. Auslagerlift darstellt.

Gemäß dem Ausführungsbeispiel sind solche Ein- und Auslagerlifte ebenfalls vorgesehen, allerdings nicht stirnseitig außerhalb des Regallagers angeordnet, sondern in größerer Anzahl in der Regelanlage bzw., in dem Regallagersystem 1, und zwar wie im Ausführungsbeispiel in den Regalreihen 12 integriert.

Eine solche Ausgestaltung bringt unter anderem eine höhere Redundanz mit sich, und zwar durch die große Anzahl der Vertikalfördereinrichtungen 28, die auch als Lift bezeichnet werden können. Ferner bringt eine solche Ausgestaltung durch kürzere Fahrstrecken der Bahnfahrzeuge 24, die auch als Shuttle bezeichnet werden können, zu den Liften auch mit sich, dass der Durchsatz bzw. die Leistung eines solchen Regallagersystems steigt. Überdies erhöht sich durch die Möglichkeit, die gegebene Raumgeometrie besser auszunutzen, die Lagerdichte.

In einer Ausgestaltung werden pro Regallagerreihe 12 mindestens eine Vertikalfördereinrichtung bzw. ein Ein- und ein Auslagerlift vorgesehen, zum Beispiel zwei oder drei oder vier oder fünf oder mehr als fünf oder mehr zehn.

Die wenigstens eine Vertikalfördereinrichtung 28 kann so angeordnet sein, dass sie zu den beiden in Längsrichtung gelegenen Enden der Regalgasse 18 bzw. Regalreihe 12 im Abstand angeordnet ist. Insbesondere können auch alle Vertikalfördereinrichtungen 28 jeweils so angeordnet sein, dass sie zu den beiden in Längsrichtung gelegenen Enden der jeweils betreffenden Regalgasse 18 bzw. Regalreihe 12 beabstandet sind. Es können aber auch eine oder mehrere Vertikalfördereinrichtungen endseitig Regalreihe 12 angeordnet sein.

Innerhalb einer Regalreihe 12 können - sofern dort mehrere Vertikalfördereinrichtungen 28 angeordnet sind - die voneinander beabstandet sein. In der jeweiligen Regallagerreihe 12 kann dort insbesondere Stauraum des Regals zwischen jeweils benachbarten Vertikalfördereinrichtungen sein.

Die in einer Regalreihe 12 vorgesehenen Vertikalfördereinrichtungen 28 können so dimensioniert sein, dass ihre Tiefe im Wesentlichen der Regalreihentiefe entspricht.

Es sei angemerkt, dass eine jeweilige Vertikalfördereinrichtung 28 jeweils auch ein einzelner Ein- und Auslagerungslift sein kann.

Wie Figur 2 oder 2A entnommen werden kann weist das Regallagersystem 1 zweite Führungseinrichtungen 32 für die Bahnfahrzeuge 24 und / oder Transporthilfsmittel auf. Diese zweiten Führungseinrichtungen (Führungsbahnen) 32 erstecken sich zumindest abschnittsweise in einer quer zu den Regalgassen gelegenen Richtung. In der Gestaltung gemäß den Figuren sind diese zweiten Führungseinrichtungen 32 in einer (einzigen) horizontalen Fördertechnikebene 30 angeordnet. Die zweiten Führungseinrichtungen 32 verlaufen längsseitig (im Abstand zu den Stirnseiten des Regallagergassen 18) in das Regallager 10 hinein. Die Transporthilfsmittel werden zwischen dem Regallager 10 und z.B. einer daran angeschlossenen Fördertechnik (nicht weiter dargestellt) über die Längsseite des Regallagers 10 (z.B. ausschließlich über die eine oder ausschließlich über beide Längsseiten) in das Regallager 10 transportiert und aus diesem wieder abtransportiert, hier z.B. mittels der zweiten Führungseinrichtungen 32.

Mittels der Vertikalfördereinrichtungen 28 können, gegebenenfalls unter Zwischenschaltung weiterer erster Führungseinrichtungen 22, Bahnfahrzeuge 24 und / oder Transporthilfsmittel von einer zweiten Führungseinrichtung 32 zu einer in einer anderen in vertikaler Richtung gelegenen Ebene angeordneten ersten Führungseinrichtung 22 transportiert werden und umgekehrt.

Die Fördertechnikebene 30 kann, in vertikaler Richtung gesehen in einem mittleren Bereich angeordnet sein, wie es in Fig. 3 gezeigt ist, aber auch ganz unten oder ganz oben oder an anderer Position oberhalb oder unterhalb der genannten Mitte.

Es kann vorgesehen sein, dass die Transporthilfsmittel beim Transport in die Regal-Gassen-Einheit 20 hinein und aus dieser heraus stets über die Fördertechnikebene 30 bewegt werden, bzw. sie stets in dieser Fördertechnikebene 30 in die Regal-Gassen-Einheit 20 hinein transportiert und in dieser Fördertechnikebene 30 in die Regal-Gassen-Einheit 20 heraus transportiert

Wie Fig. 2 entnommen werden kann, erstreckt sich diese Fördertechnikebene 30 im Wesentlichen so, dass sie sich in die Regalreihen 12 und die Regalgassen 18 erstreckt.

In der Fördertechnikebene 30 sind mehrere zweite Führungsbahnen 32 vorgesehen, die hier so angeordnet sind, dass sie sich durch mehrere Regalreihen 12 sowie durch mehrere Regalgassen 18 erstrecken. Ferner erstrecken sich diese zweiten Führungsbahnen in Längsrichtung 26 der Regalgassen 18 bzw. in Längsrichtung der Regalreihen 12.

Wie Fig. 2A entnommen werden kann, können von den Vertikalfördereinrichtungen 28 Transporthilfsmittel oder Bahnfahrzeuge 24 zu den zweiten Führungsbahnen 32 verbracht werden, so dass sie über diese weiter abtransportiert werden können, oder umgekehrt.

Über die Vertikalfördereinrichtungen ist es also möglich, zwischen zweiten Führungseinrichtungen 32 und ersten Führungseinrichtungen (Führungsbahnen) 22, die sich, in vertikaler Richtung gesehen, in einer anderen Ebene befinden, Bahnfahrzeuge, die auch als Shuttle bezeichnet werden können, oder Transporthilfsmittel zu transportieren.

Es können ein von seiner Funktion fest zugeordneter Einlagerlift und ein fest zugeordneter Auslagerlift vorgesehen sein, der in erwähnter Weise integriert ist. Dies bringt gegenüber der DE 2007 051 238 A1 z.B. einen größeren Durchsatz bzw. eine erhöhte Leistung der Regalanlage mit sich.

Es besteht aber auch die Möglichkeit jede Vertikalfördereinrichtung, die auch als Lift bezeichnet werden kann, sowohl als Einlager- wie auch als Auslagerlift zu betreiben. Dadurch wäre bei einer Regalgasse mit geringem Durchsatz/Leistung auch die Variante mit nur einem Lift denkbar.

Zum Ein- und Auslagern benötigt ein solches Regallagersystem ein bzw. kann solches Regallagersystem eine ein- und Auslagerebene in der Regelanlage haben, zur Anbindung der ein- und Auslagerlifte an die Fördertechnik einer Vorzone.

Die Ein- und Auslagerebene kann sich in einer beliebigen Höhe der Regalanlage befinden; sowohl unterhalb wie auch oberhalb des Regallagersystems.

Pro Lagerebene,wird vorzugsweise ein Shuttle eingesetzt wobei bei der Verwendung von weniger Shuttles als Ebenen die einzelnen Shuttles über mindestens einen gesonderten Lift zwischen den Ebenen einer Regalgasse wechseln können.

Diese Lifte können sowohl innerhalb der der Regalanlage wie auch stirnseitig (außerhalb) zur Regalgasse angeordnet sein.

Durch mögliche Bypass-Strecken zwischen den Ein- und Auslagerliften zwischen den Regalgassen (auf der Ein- und Auslagerebene) ist es möglich, Behälter von einer Regalgasse in eine andere Regalgasse umzulagern.

Der Vorteil hierin besteht im Ausbalancieren des Lagergutes/Behälter sowie der Möglichkeit die Leistung der verschiedenen Lifte einer Regalgasse, zur optimalen Nutzung der Vorzone, auszubalancieren.

### Bezugszeichen

- 1: Regallagersystem
- 10: Regallager
- 12: Regalreihe
- 14: Regalebene
- 16: vertikale Richtung
- 18: Regalgasse
- 20: Regal-Gassen-Einheit
- 22: erste Führungsbahn
- 24: Bahnfahrzeug
- 26: Längsrichtung von 18
- 28: Vertikalfördereinrichtungen
- 30: Fördertechnikebene
- 32: zweite Führungsbahn

## Patentansprüche

1. Regallagersystem mit
einem Regallager (10), das mehrere benachbart zueinander angeordnete Regalreihen (12) aufweist sowie Regalgassen (18), die jeweils zwischen benachbart zueinander angeordneten Regalreihen (12) gegeben sind, wobei die Regalreihen (12) jeweils in vertikaler Richtung mehrere Regalebenen (14) ausbilden und eine Vielzahl von Lagerplätzen bereitstellen, und wobei das Regallager (10) an Längsenden der Regalgassen (18) eine jeweilige Stirnseite aufweist und an seinen quer zu den Regalgassen (18) vorliegenden Querenden eine jeweilige Längsseite aufweist;
einem oder mehreren Bahnfahrzeugen (24) zum Aufnehmen und zum Transport von in den Regalreihen (12) einzulagernden oder aus den Regalreihen (12) auszulagernden Transporthilfsmitteln;
ersten Führungsbahnen (22) zum Führen der Bahnfahrzeuge (24), wobei diese ersten Führungsbahnen (22) in Längsrichtung (26) einer jeweiligen Regalgasse (18) in einer jeweiligen Regalebene verlaufen, so dass das jeweils wenigstens eine Bahnfahrzeug (24) entlang einer jeweiligen ersten Führungsbahn (22) in der jeweiligen Regalebene (14) in Längsrichtung (26) der jeweiligen Regalgasse (18) verlagerbar ist;
einer oder mehreren ersten Vertikalfördereinrichtungen (28) für die vertikale Förderung von Bahnfahrzeugen (24) und/oder Transporthilfsmitteln über mehrere Regalebenen;
wobei wenigstens eine erste Vertikalfördereinrichtung (28) in einer Regalreihe (12) angeordnet ist,
so dass diese erste Vertikalfördereinrichtung (28) in die aus den Regalreihen (12) und den zwischen Regalreihen (12) sich erstreckenden Regalgassen (18) gebildete Regal-Gassen-Einheit (20) integriert ist, wobei die jeweiligen ersten Führungsbahnen (22) der zugehörigen Regallagergasse (18) an dieser ersten Vertikalfördereinrichtung (28) vorbeilaufen, wobei
zusätzlich zu den ersten Führungsbahnen (22) zweite Führungsbahnen (32) zum Führen wenigstens eines Bahnfahrzeuges (24) vorgesehen sind, **dadurch gekennzeichnet, dass** diese zweiten Führungsbahnen (32) Führungsbahnen sind, die zumindest abschnittsweise quer zur ersten Führungsbahn (22) in einer Regalreihe (12) des Regallagers (10) verlaufen, so dass ein von diesen zweiten Führungsbahnen (32) geführtes Bahnfahrzeug (24) in wenigstens einer Regalreihe (12) quer zu einer ersten Führungsbahn (22) verlagerbar ist, und wobei bevorzugt ein mittels einer ersten Führungsbahn (22) führbares Bahnfahrzeug (24) automatisch zu einer zweiten Führungsbahn (32) verbringbar ist, wobei
sich die zweiten Führungsbahnen (32) quer zu den ersten Führungsbahnen (22) über mehrere Regalreihen (12) erstrecken und zu den Stirnseiten im Abstand angeordnet sind, und
wobei die wenigstens eine erste Vertikalfördereinrichtung (28) zu den Stirnseiten im Abstand angeordnet ist, so dass sich die jeweiligen ersten Führungsbahnen (22) der zugehörigen Regallagergasse (18) zu in Längsrichtung dieser Regallagergasse (18) beidseitig dieser ersten Vertikalfördereinrichtung (28) angeordneten Lagerplätzen erstrecken, wobei
in der Regal-Gassen-Einheit (20) eine Ein- und Auslagerungsebene (30) vorgesehen ist, über welche Transporthilfsmittel von einer Fördertechnik aus in die Regal-Gassen-Einheit (20) und aus der Regal-Gassen-Einheit (20) heraus an eine Fördertechnik gefördert werden mittels zweiter Führungsbahnen (32), und wobei
die Transporthilfsmittel zwischen dem Regallager (10) und der daran angeschlossenen Fördertechnik über die Längsseite des Regallagers (10) in das Regallager (10) transportiert und aus diesem wieder abtransportiert werden mittels der zweiten Führungsbahnen (32).

2. Regallagersystem nach einem der vorangehenden Ansprüche, **dadurch gekennzeichnet, dass** in der Regal-Gassen-Einheit (20) die Ein- und Auslagerungsebene (30) für die Anbindung der Regal-Gassen-Einheit (20) an eine Vorzone oder ein sich an die Regal-Gassen-Einheit (20) anschließendes Logistiksystem integriert ist, wobei die Transporthilfsmittel über diese Ein- und Auslagerungsebene (30) in die Regal-Gassen-Einheit (20) hinein und aus der Regal-Gassen-Einheit (20) heraus gefördert werden.

3. Regallagersystem nach einem der Ansprüche 1 bis 2, **dadurch gekennzeichnet, dass** sich wenigstens eine zweite Führungsbahn (32) quer bis zu einer oder durch eine Regalgasse (18) erstreckt, wobei sich diese zweite Führungsbahn (32)andererseits bis zu einer in Längsrichtung der Regalgassen (18) gelegenen Außenseite einer Regalreihe (12) erstreckt.

4. Regallagersystem nach einem der Ansprüche 1 bis 2, **dadurch gekennzeichnet, dass** sich wenigstens eine zweite Führungsbahn - (32) quer bis zu einer oder durch eine Regalgasse (18) erstreckt, wobei sich diese zweite Führungsbahn (32) andererseits bis zu einer quer zur Vertikalrichtung und quer zur Längsrichtung der Regalgassen (18) gelegenen Außenseite der aus den Regalreihen (12) und den zwischen Regalreihen (12) sich erstreckenden Regalgassen (18) gebildeten Regal-Gassen-Einheit (20) erstreckt.

5. Regallagersystem nach einem der Ansprüche 1 bis 4, **dadurch gekennzeichnet, dass** eine, mehrere oder alle zweite Führungsbahnen (32) horizontal verlaufen.

6. Regallagersystem nach einem der Ansprüche 1 bis 5, **dadurch gekennzeichnet, dass** die zweiten Führungsbahnen (32) im Wesentlichen in der gleichen horizontalen Ebene (30) verlaufen.

7. Regallagersystem nach einem der vorangehenden Ansprüche, **dadurch gekennzeichnet, dass** in mehreren oder in allen Regalreihen (12) jeweils wenigstens eine erste Vertikalfördereinrichtung (28)angeordnet ist.

8. Regallagersystem nach einem der vorangehenden Ansprüche, **dadurch gekennzeichnet, dass** in mehreren oder in allen Regalreihen (12) wenigstens zwei erste Vertikalfördereinrichtungen (28)angeordnet sind.

9. Regallagersystem nach einem der vorangehenden Ansprüche, **dadurch gekennzeichnet, dass** mehrere oder alle ersten Führungsbahnen (22) parallel zueinander verlaufen.

10. Regallagersystem nach einem der vorangehenden Ansprüche, **dadurch gekennzeichnet, dass** das Regallagersystem (1) als vollautomatisches Regallagersystem (1) ausgebildet ist.

11. Regallagersystem nach Anspruch 1, **dadurch gekennzeichnet, dass** ein einzulagerndes Gut und / oder Transporthilfsmittel innerhalb der Regal-Gassen-Einheit (20) automatisch von einem beliebigen ersten Lagerplatz zu einem beliebigen zweiten Lagerplatz verbringbar ist.

12. Verfahren zum Betreiben eines gemäß einem der vorangehenden Ansprüche ausgebildeten Regallagersystems (1), welches bevorzugt vollautomatisch betrieben wird, wobei
ein von außerhalb der Regal-Gassen-Einheit (20) in eine jeweilige Regalreihe (12) der Regal-Gassen-Einheit (20) einzulagerndes Transporthilfsmittel beim Verbringen in seine Ziellagerposition in diese Regalreihe (12) der Regal-Gassen-Einheit (20) von einer Seite dieser Regalreihe (12) in diese Regalreihe (12) hinein bewegt wird, wobei
ein von einer Lagerposition in dieser Regalreihe der Regal-Gassen-Einheit (20) aus der Regal-Gassen-Einheit (20) heraus zu beförderndes Transporthilfsmittel auf der anderen, von der einen Seite verschiedenen Seite dieser Regalreihe (12) aus dieser Regalreihe (12) wieder heraus bewegt wird und von dort aus aus der Regal-Gassen-Einheit (20) heraus befördert wird, wobei
die in die Regal-Gassen-Einheit (20) einzulagernden Transporthilfsmittel von einer quer zur Längsrichtung der Regalgassen (18) liegenden Außenseite her über zweite Führungsbahnen (32) in die Regal-Gassen-Einheit (20) verbracht und aus der Regal-Gassen-Einheit (20) auszulagernde Transporthilfsmittel über diese quer zur Längsrichtung der Regal-Gassen-Einheit (20) liegende Außenseite über die zweiten Führungsbahnen (32) aus der Regal-Gassen-Einheit (20) heraus verbracht werden.

## Claims

1. Rack storage system, having:
a rack storage (10) comprising several rack rows (12) arranged adjacent to each other as well as rack aisles (18) respectively provided between rack rows (12) arranged adjacent to each other, the rack rows (12) each forming several rack levels (14) in a vertical direction and providing a plurality of storing places, and wherein the rack storage (10) comprises a respective front face at the longitudinal ends of the rack aisles (18) and comprises a respective longitudinal side at its transverse ends provided transverse to the rack aisles (18),
one or more track vehicles (24) for receiving and for transporting transport aids to be stored in the rack rows (12) or to be released from the rack rows (12),
first guide tracks (22) for guiding the track vehicles (24), these first guide tracks (22) extending in a longitudinal direction (26) of a respective rack aisle (18) on a respective rack level, so that the respectively at least one track vehicle (24) is displaceable along a respective first guide track (22) on the respective rack level (14) in a longitudinal direction (26) of the respective rack aisle (18),
one or more first vertical conveyors (28) for the vertical conveying of track vehicles (24) and/or transport aids over several rack levels,
wherein at least one first vertical conveyor (28) is arranged in a rack row (12),
so that this first vertical conveyor (28) is integrated in the rack aisle unit (20) formed by the rack rows (12) and the rack aisles (18) extending between the rack rows (12), the respective first guide tracks (22) of the associated rack row aisle (18) progressing past this first vertical conveyor (28), wherein
in addition to the first guide tracks (22) second guide tracks (32) are provided for guiding at least one track vehicle (24), **characterized in that** these second guide tracks (32) are guide tracks that extend at least in sections transverse to the first guide track (22) in a rack row (12) of the rack storage (10), so that a track vehicle (24) guided by these second guide tracks (32) is displaceable in at least one rack row (12) transverse to a first guide track (22), and wherein preferably a track vehicle (24) that is guidable by means of a first guide track (22) is automatically displaceable to a second guide track (32), wherein
the second guide tracks (32) extend transverse to the first guide tracks (22) over several rack rows (12) and are disposed at a distance to the front faces,und
wherein the at least one first vertical conveyor (28) is disposed at a distance to the front faces such that the respective first guide tracks (22) of the associated rack row aisle (18) extend towards storage places disposed in longitudinal direction of this rack row aisle (18) on both sides of said first vertical conveyor (28), wherein
in the rack aisle unit (20), a storing and releasing level (30) is provided, via which the transport aids are conveyed by a conveyance into the rack aisle unit (20) and out of the rack aisle unit (20) to a conveyance by means of second guide tracks (32), and wherein
the transport aids are transported between the rack storage (10) and the conveyance connected thereto via the longitudinal side of the rack storage (10) into the rack aisle unit (20) and out therefrom by means of the second guide tracks (32).

2. Rack storage system according to claim 1, **characterized in that** the storing and releasing level (30) for connecting the rack aisle unit (20) to a pre-zone or a logistics system connecting to the rack aisle unit (20) is integrated in the rack aisle unit (20), the transport aids being conveyed via this storing and releasing level (30) into the rack aisle unit (20) and out of the rack aisle unit (20) .

3. Rack storage system according to any of claims 1 to 2, **characterized in that** at least one second guide track (32) extends in a transverse manner as far as or through a rack aisle (18), this second guide track (32) on the other hand extending up to an outside of a rack row (12) situated in a longitudinal direction of the rack aisles (18).

4. Rack storage system according to any of claims 1 to 2, **characterized in that** at least one second guide track (32) extends in a transverse manner as far as or through a rack aisle (18), this second guide track (32) on the other hand extending up to an outside of the rack aisle unit (20) formed by the rack rows (12) and the rack aisles (18) extending between the rack rows (12), which is situated transverse to the vertical direction and transverse to the longitudinal direction of the rack aisles (18).

5. Rack storage system according to any of claims 1 to 4, **characterized in that** one, several or all second guide tracks (32) extend horizontally.

6. Rack storage system according to any of claims 1 to 5, **characterized in** the second guide tracks (32) substantially extend on the same horizontal level (30).

7. Rack storage system according to any of the preceding claims, **characterized in that** respectively at least one first vertical conveyor (28) is arranged in several or in all rack rows (12).

8. Rack storage system according to any of the preceding claims, **characterized in that** at least two first vertical conveyors (28) are arranged in several or in all rack rows (12).

9. Rack storage system according to any of the preceding claims, **characterized in that** several or all first guide tracks (22) extend in parallel to each other.

10. Rack storage system according to any of the preceding claims, **characterized in that** the rack storage system (1) is formed as a fully automated rack storage system (1).

11. Rack storage system according to claim 1, **characterized in that** a good and/or transport aid to be stored is displaceable automatically within the rack aisle unit (20) from any first storing place to any second storing place.

12. Method for operating a rack storage system (1) formed according to any of the preceding claims, which is preferably operated in a fully automated manner, wherein
a transport aid to be stored from outside the rack aisle unit (20) into a respective rack row (12) of the rack aisle unit (20) is moved from one side of said rack row (12) into this rack row (12) when being displaced into its target storing position into this rack row (12), wherein
a transport aid to be conveyed from a storing position in this rack row of the rack aisle unit (20) out of the rack aisle unit (20) is moved out again of this rack row (12) on the other side of this rack row (12) differing from the one side, and is conveyed out of the rack aisle unit (20) from there, wherein
the transport aids to be stored in the rack aisle unit (20) are passed into the rack aisle unit (20) from an outside situated transverse to the longitudinal direction of the rack aisles (18) by way of second guide tracks (32), and transport aids to be released from the rack aisle unit (20) are passed out of the rack aisle unit (20) by way of the second guide tracks (32) via this outside situated transverse to the longitudinal direction of the rack aisle unit (20).

## Revendications

1. Système d'entreposage à étagères, avec
un magasin à rayonnages (10) comportant plusieurs rangées de rayonnages (12) contiguës les unes aux autres ainsi que des allées de rayonnages (18) respectivement présentes entre deux rangées de rayonnages (12) contiguës, les rangées de rayonnages (12) formant plusieurs niveaux (14) dans la direction verticale et et fournissant une pluralité d'emplacements d'entreposage, et le magasin à rayonnages (10) présentant un côté frontal respectif aux extrémités longitudinales des allées de rayonnages (18) et un côté longitudinal respectif à ses extrémités transversales présentes transversalement aux allées de rayonnages (18) ;
un ou plusieurs véhicules sur rails (24) pour la réception et le transport de moyens auxiliaires de transport à entreposer dans les rangées de rayonnages (12) ou à déstocker des rangées de rayonnages (12) ;
de premiers rails de guidage (22) pour guider les véhicules sur rails (24), lesdits premiers rails de guidage (22) s'étendant sur chaque niveau dans la direction longitudinale (26) de chaque allée de rayonnages (18), si bien que le ou les véhicules sur rails (24) sont déplaçables le long d'un premier rail de guidage (22) sur chaque niveau (14) dans la direction longitudinale (26) de chaque allée de rayonnages (18) ;
un ou plusieurs premiers dispositifs de convoyage vertical (28) pour le convoyage vertical de véhicules sur rails (24) et/ou de moyens auxiliaires de transport sur plusieurs niveaux ;
au moins un premier dispositif de convoyage vertical (28) étant disposé dans une rangée de rayonnages (12),
si bien que ledit premier dispositif de convoyage vertical (28) est intégré à l'unité rayonnages-allées (20) constituée par les rangées de rayonnages (12) et les allées de rayonnages (18) s'étendant entre les rangées de rayonnages (12), les premiers rails de guidage (22) de l'allée de rayonnages (18) correspondante passant contre ledit premier dispositif de convoyage vertical (28),
deuxième rails de guidage (32) pour guider au moins un véhicule sur rails (24) étant prévu en plus des premiers rails de guidage (22),
**caractérisé en ce que**
lesdits deuxièmes rails de guidage (32) sont des rails de guidage qui s'étendent au moins en partie transversalement au premier rail de guidage (22) dans une rangée de rayonnages (12) du magasin à rayonnages (10), si bien qu'un véhicule sur rails (24) guidé par lesdits deuxième rails de guidage (32) est déplaçable dans au moins une rangée de rayonnages (12) transversalement à un premier rail de guidage (22), et un véhicule sur rails (24) guidable au moyen d'un premier rail de guidage (22) pouvant préférentiellement être automatiquement conduit vers un deuxième rail de guidage (32),
les deuxième rails de guidage (32) s'étendant transversalement aux premiers rails de guidage (22) sur plusieurs rangées de rayonnages (12) et étant espacés par rapport aux côtés frontaux, et
l'au moins un premier dispositif de convoyage vertical (28) étant espacé par rapport aux côtés frontaux, de sorte que les premières rails de guidage (22) respectifs de l'allée de rayonnages (18) correspondante s'étendent vers des emplacements d'entreposage disposés dans la direction longitudinale de cette allée de rayonnages (18) de part et d'autre de ce premier dispositif de transport vertical (28),
dans l'unité rayonnages-allées (20), un niveau de stockage et de déstockage (30) étant prévu par lequel des moyens auxiliaires de transport sont convoyés d'une technique de convoyage dans l'unité rayonnages-allées (20) et hors de l'unité rayonnages-allées (20) vers une technique de convoyage au moyen de deuxièmes rails de guidage (32), et
les moyens auxiliaires de transport sont transportés entre le magasin à rayonnages (10) et la technique de convoyage qui y est raccordée, par le côté longitudinal du magasin à rayonnages (10), dans le magasin à rayonnages (10) et sont à nouveau évacués de celui-ci au moyen des deuxièmes rails de guidage (32).

2. Système d'entreposage à étagères selon la revendication 1, **caractérisé en ce que** le niveau de stockage et de déstockage (30) est intégré à l'unité rayonnages-allées (20) pour la liaison de l'unité rayonnages-allées (20) à une zone antérieure ou à un système logistique adjacent à l'unité rayonnages-allées (20), les moyens auxiliaires de transport étant convoyés vers l'unité rayonnages-allées (20) et hors de l'unité rayonnages-allées (20) par ledit niveau de stockage et de déstockage (30).

3. Système d'entreposage à étagères selon l'une des revendications 1 à 2, **caractérisé en ce qu'**au moins un deuxième rail de guidage (32) s'étend transversalement jusqu'à une allée de rayonnages (18) ou au travers d'une allée de rayonnages, ledit deuxième rail de guidage (32) s'étendant d'autre part jusqu'à un côté extérieur d'une rangée de rayonnages (12), situé dans la direction longitudinale des allées de rayonnages (18).

4. Système d'entreposage à étagères selon la revendication 1 ou la revendication 2, **caractérisé en ce qu'**au moins un deuxième rail de guidage (32) s'étend transversalement jusqu'à une allée de rayonnages (18) ou au travers d'une allée de rayonnages, ledit deuxième rail de guidage (32) s'étendant d'autre part jusqu'à un côté extérieur de l'unité rayonnages-allées (20) constituée par les rangées de rayonnages (12) et les allées de rayonnages (18) s'étendant entre les rangées de rayonnages (12), situé transversalement par rapport à la direction verticale et transversalement par rapport à la direction longitudinale des allées de rayonnages (18).

5. Système d'entreposage à étagères selon l'une des revendications 1 à 4, **caractérisé en ce qu'**un, plusieurs, ou tous les deuxièmes rails de guidage (32) s'étendent horizontalement.

6. Système d'entreposage à étagères selon l'une des revendications 1 à 5, **caractérisé en ce que** lesdits deuxièmes rails de guidage (32) s'étendent sensiblement sur le même niveau (30) horizontal.

7. Système d'entreposage à étagères selon l'une des revendications précédentes, **caractérisé en ce qu'**au moins un premier dispositif de convoyage vertical (28) est disposé dans plusieurs, ou dans toutes les rangées de rayonnages (12).

8. Système d'entreposage à étagères selon l'une des revendications précédentes, **caractérisé en ce qu'**au moins deux premiers dispositifs de convoyage vertical (28) sont disposés dans plusieurs ou dans toutes les rangées de rayonnages (12).

9. Système d'entreposage à étagères selon l'une des revendications précédentes, **caractérisé en ce que** plusieurs, ou tous les premiers rails de guidage (22) s'étendent parallèlement entre eux.

10. Système d'entreposage à étagères selon l'une des revendications précédentes, **caractérisé en ce que** ledit système d'entreposage à étagères (1) est réalisé comme système d'entreposage à étagères (1) entièrement automatisé.

11. Système d'entreposage à étagères selon la revendication 1, **caractérisé en ce qu'**une marchandise et/ou un moyen auxiliaire de transport à entreposer sont déplaçables automatiquement d'un premier emplacement d'entreposage quelconque à un deuxième emplacement d'entreposage quelconque à l'intérieur de l'unité rayonnages-allées (20).

12. Procédé d'exploitation d'un système d'entreposage à étagères (1) réalisé selon l'une des revendications précédentes, lequel est préférentiellement exploité de manière entièrement automatisée,
un moyen auxiliaire de transport à entreposer dans une rangée de rayonnages (12) de l'unité rayonnages-allées (20) depuis l'extérieur de l'unité rayonnages-allées (20) étant, lors du déplacement vers sa position d'entreposage finale, déplacé vers ladite rangée de rayonnages (12) de l'unité rayonnages-allées (20) depuis un côté de ladite rangée de rayonnages (12),
un moyen auxiliaire de transport à convoyer hors de l'unité rayonnages-allées (20) depuis une position d'entreposage dans ladite rangée de rayonnages de l'unité rayonnages-allées (20) étant à nouveau déplacé hors de ladite rangée de rayonnages (12) sur l'autre côté, différent du premier côté, de ladite rangée de rayonnages (12), et étant de là convoyé hors de l'unité rayonnages-allées (20),
les moyens auxiliaires de transport à entreposer dans l'unité rayonnages-allées (20) étant déplacés sur de deuxièmes rails de guidage (32), d'un côté extérieur situé transversalement à la direction longitudinale des allées de rayonnages (18) vers l'unité rayonnages-allées (20), et les moyens auxiliaires de transport à déstocker de l'unité rayonnages-allées (20) étant déplacés sur les deuxièmes rails de guidage (32) hors de l'unité rayonnages-allées (20) sur ledit côté extérieur situé transversalement à la direction longitudinale de l'unité rayonnages-allées (20).
